Europäisches Patentamt

European Patent Office

Office européen des brevets

(11) Veröffentlichungsnummer: **0 109 095**
**A1**

## (12) EUROPÄISCHE PATENTANMELDUNG

(21) Anmeldenummer: **83111454.1**

(22) Anmeldetag: **15.11.83**

(51) Int. Cl.³: **B 62 D 55/08,** B 62 D 55/06,
B 62 D 55/24, B 62 D 55/28,
B 60 B 19/00

(30) Priorität: **16.11.82 DE 3242408**

(43) Veröffentlichungstag der Anmeldung: **23.05.84**
**Patentblatt 84/21**

(84) Benannte Vertragsstaaten: **IT**

(71) Anmelder: **Wössner, Heinz, D-7605 Bad**
**Peterstal-Griesbach (DE)**

(72) Erfinder: **Wössner, Heinz, D-7605 Bad**
**Peterstal-Griesbach (DE)**

(74) Vertreter: **Vogeser, Werner, Dipl.-Ing. et al,**
**Patentanwälte Hansmann & Vogeser**
**Albert-Rosshaupter-Strasse 65, D-8000 München 70 (DE)**

(54) **Motorfahrzeug.**

㉗ Die vorliegende Erfindung betrifft ein Motorfahrzeug mit wenigstens einer Profillauffläche mit Querprofilierung, deren Profilstücke in Form von Stollen, Querrippen oder dergleichen in Laufrichtung unter Abstand angeordnet sind, das eine hohe Geländegängigkeit sowie eine hohe Laufruhe beim Befahren von ebenen Flächen auszeichnet. Zu diesem Zweck besteht die Profillauffläche aus zwei Teilprofilen, die in Laufrichtung relativ zueinander verstellbar sind.

EP 0 109 095 A1

**0109095**

"Motorfahrzeug"

Die Erfindung betrifft ein Motorfahrzeug entsprechend dem Oberbegriff des Anspruchs 1.

Motorfahrzeuge mit Profillaufflächen wie z.B. Raupen- oder Kettenfahrzeuge sind bekanntlich wegen ihrer Geländegängigkeit vielseitig einsetzbar. Nachteilig wirken sich derartige Profillaufflächen jedoch durch geringe Laufruhe dann aus, wenn sich ein Fahrzeug auf ebenem Boden bewegt. Ein besonderer Nachteil ergibt sich beim Kurvenfahren oder beim Drehen auf der Stelle, da dadurch die Straßenoberfläche erheblich beschädigt wird. Ähnliche Probleme ergeben sich auch bei Fahrzeugen, bei denen die Profillaufflächen durch Stollen an den Laufrädern gebildet sind.

Der Erfindung liegt die Aufgabe zugrunde, ein Fahrzeug zu schaffen, das eine hohe Geländegängigkeit hat, gleichzeitig sich aber durch hohe Laufruhe beim Befahren von ebenen Flächen auszeichnet.

Gelöst wird diese Aufgabe gemäß der Erfindung durch die im kennzeichnenden Teil des Anspruchs 1 angegebenen Merkmale. Zweckmäßige Ausgestaltungen der Erfindung ergeben sich aus den Unteransprüchen.

Die Aufteilung der Profillauffläche in zwei Teilprofile, die in Laufrichtung relativ zueinander verstellbar sind, ergibt die Möglichkeit, die Profilstücke der beiden Teilprofile derart relativ zueinander anzuordnen, daß die Profilstücke des einen Teilprofils zwar seitlich versetzt, sich jedoch in Höhe der Zwischenräume zwischen den Profilstücken des anderen Teilprofils befinden. Damit liegt das Fahrzeug gleichzeitig mit den Profilstücken beider Teilprofile auf dem Boden auf.

Die Verwirklichung der Teilprofile kann in der Praxis auf verschiedene Art erfolgen. Z.B. können die Teilprofile an zwei nebeneinander liegenden gleichachsigen Laufrädern ausgebildet sein. Diese beiden je ein Teilprofil aufweisenden Laufräder können z.B. das Hinterrad eines Motorrades bilden. Es ist aber auch möglich, die Teilprofile bei Raupen- bzw. Kettenfahrzeugen vorzusehen. In diesem Falle hat das Fahrzeug an beiden Längsseiten je zwei Raupenbänder, die jeweils ein Teilprofil aufweisen. Weiterhin ist es möglich, die Teilprofile einer Profillauffläche aus einem Laufrad und einem Raupenband zu bilden.

Bei allen Anwendungsfällen ergibt sich eine relativ hohe Laufruhe, wenn die Teilprofile relativ zueinander versetzt sind, da dann die Lücken zwischen den Profilstücken des einen Teilprofils durch die Profilstücke des anderen Teilprofils ausgeglichen werden. Die Laufruhe führt nicht nur zu einer geringeren Erschütterung des Fahrzeuges selbst, sondern auch zu einer verminderten Geräuschentwicklung. Wegen der günstigeren Lastverteilung führt das Kurvenfahren und das Drehen auf der Stelle zu einer weitaus geringeren Beschädigung der Bodenoberfläche durch das Fahrzeug.

Werden die Profillaufflächen derart verstellt, daß die Profilstücke nebeneinander liegen, hat das Fahrzeug die Geländegängigkeit üblicher derartiger bekannter Fahrzeuge.

Zweckmäßigerweise sind die Teilprofile einer Profillauffläche um wenigstens die Hälfte des Mittenabstandes zweier aufeinanderfolgender Profilstücke verstellbar, so daß die Profilstücke des einen Teilprofils auf die Mitte zwischen den Profilstücken des anderen Teilprofils eingestellt werden können. Der Zwischenraum zwischen den Profilstücken sollte nach Größe und Form etwa den Profilstücken selbst entsprechen.

Die Erfindung wird nachstehend anhand der Fig. 1 bis 8 beispielsweise erläutert. Es zeigen:

Fig. 1 bis 4    Seitenansichten zweier je ein Teilprofil einer Profillauffläche aufweisender Laufräder in Laufrichtung und quer zur Laufrichtung, und

Fig. 5 bis 8    entsprechende Darstellungen zweier Laufräder, über die je ein Raupenband läuft.

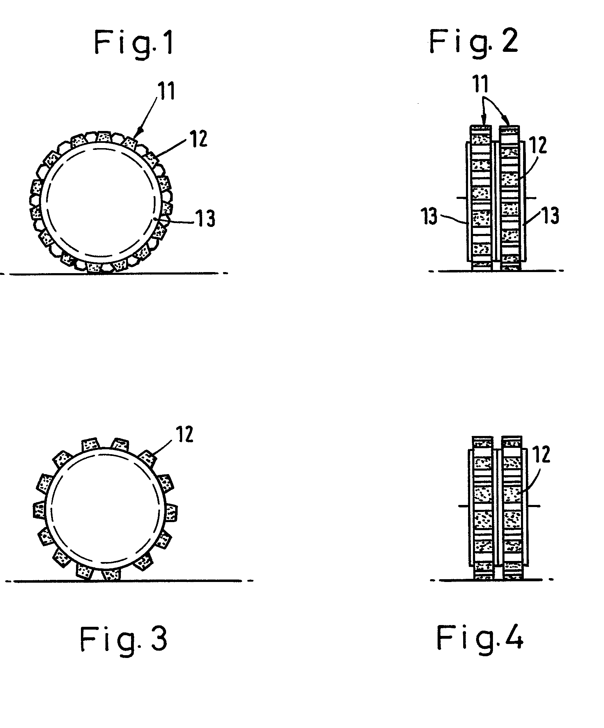

Die Fig. 1 bis 4 zeigen die Ausbildung einer Profillauffläche an zwei gleichachsigen Laufrädern 13. Jedes Laufrad 13 hat ein Teilprofil 11. Die beiden Teilprofile der Laufräder bilden zusammen eine Profillauffläche. Beide Laufräder sind relativ zueinander drehbar und damit die Teilprofile relativ zueinander verstellbar. Die Teilprofile bestehen aus Profilstücken bzw. Stollen 12, deren Abstand etwa gleich der Breite der Stollen ist. Der Zwischenraum zwischen den Stollen 12 ist komplementär zu den Stollen geformt. In den Fig. 1 und 2 ist die Betriebsstellung der Laufräder gezeigt, in der sich ein mit solchen Rädern ausgestattetes Fahrzeug, z.B. ein Motorrad, dessen Hinterrad diese beiden Laufräder aufweist, auf ebenem Boden bewegt. In diesem Falle sind die Stollen 12 derart gegeneinander versetzt, daß sich jeweils die Stollen des einen Teilprofils auf der Höhe der Zwischenräume zwischen den Stollen des anderen Teilprofils befinden. Damit kommen die beiden Laufräder mit ihren Stollen abwechselnd vollständig und im Bereich der Zwischenräume zwischen den Stollen teilweise zur Auflage.

Die Fig. 3 und 4 zeigen die Betriebsstellung für Geländefahrt, in der die Stollen und die Zwischenräume zwischen diesen miteinander fluchten.

Die Fig, 5 bis 8 zeigen die Ausbildung der Teilprofile 11 einer Profilauffläche an Raupenbändern, die über zwei hintere und zwei vordere Laufräder geführt sind.

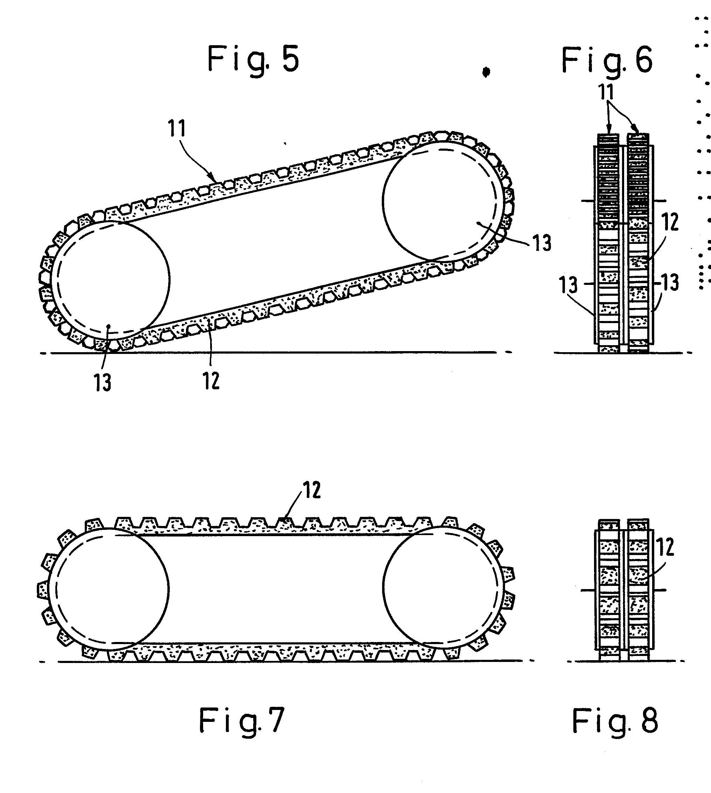

Die Fig. 5 und 6 zeigen die Betriebsstellung der relativ zueinander verschiebbaren Raupenbänder in der Betriebsstellung für das Befahren einer ebenen Bodenfläche. Die vorderen Laufräder sind dabei durch Schwenken des Fahrgestells um die Hinterachse nach oben verstellt, so daß sich bezüglich der Auflagefläche ähnliche Verhältnisse wie bei den mit Stollen versehenen Laufrädern in den Fig. 1 und 2 ergeben, d.h., daß sich ein mit solchen Raupenbändern ausgestattetes Raupenfahrzeug ähnlich wie ein mit normalen Laufrädern versehenes Fahrzeug bewegen läßt. Selbstverständlich ist in diesem Falle noch wenigstens ein zusätzliches, nicht gezeigtes Lenkrad erforderlich, mit dem sich das Fahrzeug ebenfalls am Boden abstützt. Gegenüber normalen Raupenfahrzeugen ergibt sich dabei der Vorteil, daß aufgrund der günstigen Belastungsverteilung die Beschädigung der Bodenoberfläche gering gehalten werden kann.

Die Fig. 7 und 8 zeigen wiederum die Betriebsstellung, in der sich das Fahrzeug im Gelände bewegt, d.h., daß die Profilstücke bzw. Stollen 12 der Raupenbänder sowie die Zwischenräume zwischen diesen aufeinander ausgerichtet sind. Das Fahrgestell ist in dieser Betriebsstellung wieder in die normale horizontale Lage geschwenkt. Das nicht gezeigte Lenkrad kann ebenfalls am Boden aufliegen oder abgehoben sein.

HEINZ WÖSSNER
D-7605 Bad Peterstal-Griesbach
18023/18023A

16. Nov. 1982

Vg/BCh

0109095

Motorfahrzeug

Patentansprüche

1. Motorfahrzeug mit wenigstens einer Profillauffläche mit Querprofilierung, deren Profilstücke in
Form von Stollen, Querrippen oder dergleichen in Laufrichtung unter Abstand angeordnet sind, d a d u r c h
g e k e n n z e i c h n e t , daß die Profillauffläche
aus zwei Teilprofilen (11) besteht, die in Laufrichtung
relativ zueinander verstellbar sind.

2. Fahrzeug nach Anspruch 1, d a d u r c h g e -
k e n n z e i c h n e t , daß die Teilprofile (11)
um wenigstens die Hälfte des Mittenabstandes zweier
aufeinanderfolgender Profilstücke (12) verstellbar sind.

3. Fahrzeug nach Anspruch 1 oder 2, d a d u r c h
g e k e n n z e i c h n e t , daß die Teilprofile (11)
an gleichachsigen Laufrädern (13) ausgebildet sind.

4. Fahrzeug nach Anspruch 1 oder 2, d a d u r c h
g e k e n n z e i c h n e t , daß die Teilprofile (11)
an Raupenbändern ausgebildet sind.

5. Fahrzeug nach Anspruch 4, d a d u r c h g e -
k e n n z e i c h n e t , daß bei Ausbildung als Raupenfahrzeug an jeder Fahrzeuglängsseite zwei je ein Teilprofil tragende Raupenbänder angeordnet sind.

6.    Fahrzeug nach Anspruch 5, d a d u r c h   g e - k e n n z e i c h n e t ,   daß die Raupenbänder über wenigstens zwei Laufräder (13) geführt sind.

7.    Fahrzeug nach Anspruch 6, d a d u r c h   g e - k e n n z e i c h n e t ,   daß die vorderen Laufräder (13) höhenverstellbar sind.

8.    Fahrzeug nach Anspruch 7, d a d u r c h   g e - k e n n z e i c h n e t ,   daß das Fahrgestell um die Fahrzeughinterachse kippbar ist.

9.    Fahrzeug nach Anspruch 3, d a d u r c h   g e - k e n n z e i c h n e t ,   daß bei Ausbildung als Zweirad wenigstens hinten zwei je ein Teilprofil (11) aufweisende Laufräder (13) angeordnet sind.

10.    Fahrzeug nach Anspruch 3, d a d u r c h   g e - k e n n z e i c h n e t ,   daß bei Ausbildung als Sackkarre an beiden Fahrzeugseiten je zwei je ein Teilprofil (11) aufweisende Laufräder (13) angeordnet sind, die alle gleichachsig sind.

11.    Fahrzeug nach einem der Ansprüche 1 bis 10, d a d u r c h   g e k e n n z e i c h n e t ,   daß von den verstellbaren Teilprofilen einer Profillauffläche die eine relativ zur anderen verstellbar ist.

12.    Fahrzeug nach einem der Ansprüche 1 bis 11, d a d u r c h   g e k e n n z e i c h n e t ,   daß der Abstand zwischen den Profilstücken (12) der Teilprofile etwa gleich der Breite der Profilstücke ist.

13.    Fahrzeug nach Anspruch 12, d a d u r c h   g e - k e n n z e i c h n e t ,   daß die Form des Zwischenraums zwischen den Profilstücken (12) komplementär zur Form der Profilstücke ist.

14. Fahrzeug nach Anspruch 1, d a d u r c h  g e - k e n n z e i c h n e t , daß die Teilprofile einer Profillauffläche aus einem Laufrad und einem Raupenband gebildet ist.

Fig.1

11
12
13

Fig.2

11
12
13   13

Fig.3

12

Fig.4

12

2/2 0109095

Fig. 5

11

13

13  12

Fig. 6

11

12

13  13

Fig. 7

12

Fig. 8

12

Europäisches
Patentamt

EUROPÄISCHER RECHERCHENBERICHT

0109095
Nummer der Anmeldung

EP 83 11 1454

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-4 223 753 (BRADBURY)<br>* Abbildungen 1-3; Spalte 5, Zeilen 12-64 *<br><br>--- | 1-6,11 | B 62 D 55/08<br>B 62 D 55/06<br>B 62 D 55/24<br>B 62 D 55/28<br>B 60 B 19/00 |
| A | FR-E- 34 571 (KEGRESSE)<br>* Seite 1, Zeilen 30-42; Abbildung 1 *<br><br>--- | 1 | |
| A | FR-A- 640 138 (KEGRESSE)<br>* Seite 2, Zeilen 29-35; Abbildung 7 *<br><br>----- | 1 | |

| RECHERCHIERTE SACHGEBIETE (Int. Cl. ³) |
|---|
| B 62 D<br>B 60 B |

Der vorliegende Recherchenbericht wurde für alle Patentansprüche erstellt.

| Recherchenort | Abschlußdatum der Recherche | Prüfer |
|---|---|---|
| DEN HAAG | 16-02-1984 | SCHMAL R. |